(19) 

(11) **EP 4 254 636 B1**

(12) **EUROPEAN PATENT SPECIFICATION**

(45) Date of publication and mention of the grant of the patent:
**30.09.2026 Bulletin 2026/40**

(21) Application number: **22861766.8**

(22) Date of filing: **26.08.2022**

(51) International Patent Classification (IPC):
***H01M 50/489*** *(2021.01)* ***H01M 50/451*** *(2021.01)*
***H01M 50/446*** *(2021.01)* ***H01M 50/46*** *(2021.01)*
***H01M 10/058*** *(2010.01)* ***H01M 10/052*** *(2010.01)*
***H01M 50/414*** *(2021.01)* ***H01M 50/429*** *(2021.01)*
***H01M 10/0525*** *(2010.01)* ***H01M 50/417*** *(2021.01)*
***H01M 50/443*** *(2021.01)* ***H01M 50/457*** *(2021.01)*
***H01M 50/491*** *(2021.01)*

(52) Cooperative Patent Classification (CPC):
**H01M 10/052; H01M 10/0525; H01M 50/414; H01M 50/417; H01M 50/4295; H01M 50/443; H01M 50/446; H01M 50/451; H01M 50/457; H01M 50/461; H01M 50/489; H01M 50/491;**
Y02E 60/10

(86) International application number:
**PCT/KR2022/012836**

(87) International publication number:
**WO 2023/027558 (02.03.2023 Gazette 2023/09)**

(54) **SEPARATOR FOR ELECTROCHEMICAL DEVICE, AND ELECTRODE ASSEMBLY AND ELECTROCHEMICAL DEVICE INCLUDING THE SAME**

SEPARATOR FÜR EINE ELEKTROCHEMISCHE VORRICHTUNG, SOWIE ELEKTRODENANORDNUNG UND DIESE ENTHALTENDE ELEKTROCHEMISCHE VORRICHTUNG

SÉPARATEUR POUR DISPOSITIF ÉLECTROCHIMIQUE, ET ENSEMBLE D’ÉLECTRODES ET DISPOSITIF ÉLECTROCHIMIQUE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2021 KR 20210114280**

(43) Date of publication of application:
**04.10.2023 Bulletin 2023/40**

(73) Proprietor: **LG Energy Solution, Ltd.**
**Seoul 07335 (KR)**

(72) Inventors:
- **PARK, So-Jung**
  **Daejeon 34122 (KR)**
- **BAE, Won-Sik**
  **Daejeon 34122 (KR)**
- **LEE, Jong-Yoon**
  **Daejeon 34122 (KR)**
- **LEE, So-Yeong**
  **Daejeon 34122 (KR)**
- **JEONG, So-Mi**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 3 866 244** **EP-A1- 4 142 036**
**JP-A- 2018 056 435** **JP-B1- 5 743 032**
**JP-B2- 4 685 974** **KR-A- 20180 040 353**
**KR-B1- 101 301 595** **US-A1- 2014 287 295**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 254 636 B1

## Description

### TECHNICAL FIELD

The present disclosure relates to a separator for an electrochemical device, and an electrode assembly and an electrochemical device including the same.

The present application claims priority to Korean Patent Application No. 10-2021-0114280 filed on August 27, 2021 in the Republic of Korea.

### BACKGROUND ART

Recently, energy storage technology has been given an increasing attention. As the application of energy storage technology has been extended to energy for cellular phones, camcorders and notebook PCs and even to energy for electric vehicles, efforts for research and development of electrochemical devices are becoming more and more concrete. In this context, electrochemical devices have been most spotlighted. Among such electrochemical devices, rechargeable secondary batteries, thin-type secondary battery batteries applicable to various products, and high-energy density lithium secondary batteries have been focused. More recently, in developing such secondary batteries, many attentions have been given to ensuring safety.

In the currently produced lithium secondary batteries, a porous substrate using a polyolefin-based polymer resin has been used as a substrate for a separator in order to prevent a short-circuit between a positive electrode and a negative electrode. However, the porous substrate has poor heat resistance and is shrunk or molten at high temperature to cause a short-circuit undesirably. Therefore, in order to solve the above-mentioned problem, there has been frequently used a method for improving the heat resistance by forming a porous coating layer including an inorganic filler mixed with a binder polymer on at least one surface of the porous substrate. However, when such a porous coating layer is introduced, the separator causes another problem, such as an increase in resistance, degradation of adhesion to an electrode, or the like. Therefore, there is a need for a solution to the problem.

**In** addition, there has been an attempt to realize thinning of a battery by forming a separator with a small thickness in order to increase the energy density of a battery and to reduce the resistance of a separator. However, in the case of a separator having a small thickness, adhesion between the separator and an electrode is lowered to cause the problem of degradation of assemblage processability and battery safety. Therefore, there is a need for a separator capable of realizing stable adhesion in a battery and ensuring heat resistance and stability, even though it has a small thickness.

When using a humidified phase separation process in a method for manufacturing a separator by introducing a porous coating layer thereto, a humidified phase separation is carried out after coating a slurry including an inorganic filler mixed with a binder polymer on a porous substrate. Herein, as the amount of the binder polymer distributed on the surface of the porous coating layer is increased, adhesion to an electrode may be improved. Under these circumstances, there is a need for developing an optimized ratio of the inorganic filler to the binder polymer in the porous coating layer.

EP 4 142 036, EP 3 866 244 and US 2014/287295 are prior art documents referring to separators comprising a porous substrate and a porous coating layer comprising a binder polymer and an inorganic filler.

### DISCLOSURE

#### Technical Problem

The present disclosure is designed to solve the problems of the related art, and therefore the present disclosure is directed to providing a separator for an electrochemical device, which ensures the safety of an electrochemical device, provides improved adhesion between the porous substrate and the porous coating layer of the separator, shows improved adhesion to an electrode, and has improved heat resistance and stability. The present disclosure is also directed to an electrochemical device including the separator.

It will be easily understood that these and other objects and advantages of the present disclosure may be realized by the means or methods shown in the appended claims and combinations thereof.

#### Technical Solution

The inventors of the present disclosure have found that the above technical problem can be solved by the separator for an electrochemical device as described in the appended set of claims.

Advantageous Effects

The separator for an electrochemical device according to the present disclosure includes a binder polymer in a predetermine range of content determined considering the BET (Brunauer, Emmett, Teller) surface area of an inorganic filler and the content of the inorganic filler. In this manner, it is possible to control the distribution of the binder polymer in such a manner that the binder polymer covering the surface of the inorganic filler and the binder disposed on the surface of a porous coating layer may be distributed suitably in the porous coating layer.

Therefore, it is possible to improve the adhesion between the porous substrate and the porous coating layer of the separator and the adhesion between the separator and an electrode, and to enhance the heat resistance and stability.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

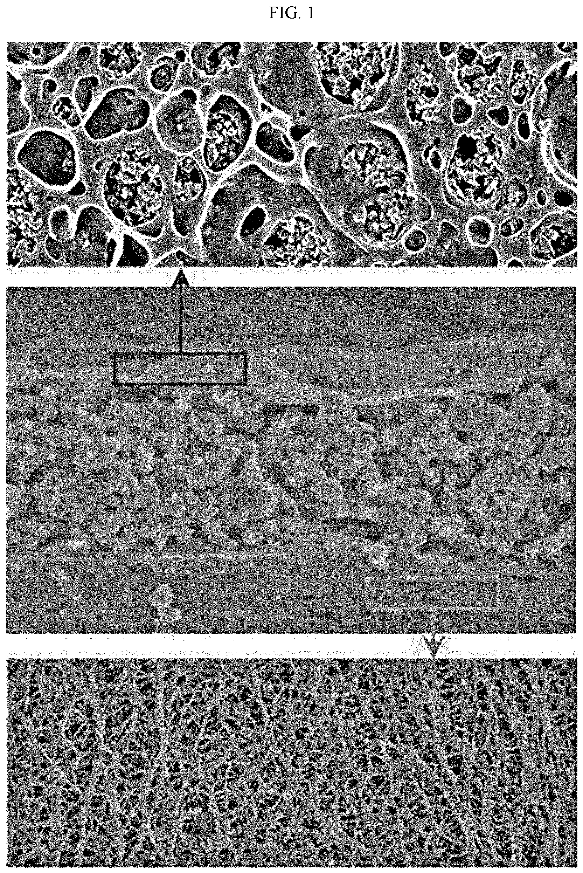

FIG. 1 is a scanning electron microscopic (SEM) image illustrating the section of the separator according to Example 1, and particularly shows an SEM image of the enlarged section of the surface of the porous coating layer provided in the separator according to Example 1 / section of the separator / enlarged section of the porous substrate (polymer film made of polyethylene).

BEST MODE

1 gf/25mm corresponds to 0.3923 N/m.

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, the expression 'a part includes or comprises an element' does not preclude the presence of any additional elements but means that the part may further include the other elements.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

The present disclosure relates to a separator for an electrochemical device, and an electrode assembly and an electrochemical device including the same.

In general, when a porous coating layer having a small thickness is incorporated to an electrochemical device in order to accomplish the thinning of the electrochemical device, there are problems in that the adhesion (Peel strength) between the porous coating layer and a porous substrate and the adhesion (Lami strength) between an electrode and a separator are degraded significantly. In addition, since the porous substrate has poor heat resistance, it is difficult to ensure the safety of the electrochemical device.

Under these circumstances, the inventors of the present disclosure have conducted intensive studies to solve the above-mentioned problems, and thus to provide a separator for an electrochemical device showing a sufficient level of adhesion (Peel strength and Lami strength) and excellent heat resistance and stability, and capable of ensuring safety.

Hereinafter, the separator for an electrochemical device according to the present disclosure will be explained in detail.

In one aspect, there is provided a separator for an electrochemical device, including a porous substrate, and a porous coating layer formed on at least one surface of the porous substrate, wherein the porous coating layer includes an inorganic filler and a binder polymer, and satisfies the following Formula 1:

$$20 \leq [\text{Content of inorganic filler (wt\%)} \times \text{BET surface area of inorganic filler } (m^2/g)] / [\text{Content of binder polymer (wt\%)}] \leq 30 \quad \text{[Formula 1]}$$

(wherein the content of binder polymer and the content of inorganic filler are based on 100 wt% of the total weight of the porous coating layer.)

Particularly, the porous coating layer of the separator according to the present disclosure includes the binder

polymer in a predetermine range of content determined considering the BET surface area of the inorganic filler and the content of the inorganic filler. **In** this manner, the binder polymer covering the surface of the inorganic filler and the binder polymer disposed on the surface of the porous coating layer may be distributed in a suitable amount in the porous coating layer, thereby providing a good balance of the adhesion (Peel strength and Lami strength) with heat resistance and stability.

Particularly, the separator according to the present disclosure shows excellent adhesion between the electrode and the separator, excellent adhesion between the porous substrate and the porous coating layer, and excellent heat resistance and stability, as compared to a separator having the same or equivalent ratio of the content of inorganic filler to the content of binder polymer in the porous coating layer.

Meanwhile, in the case of a separator manufactured through a humidified phase separation process, the binder polymer and the inorganic filler are present in combination in the porous coating layer, and the binder is used to ensure the binding force among the inorganic filler particles. For this, it is important to control the amount of the binder polymer required for binding the inorganic filler with the binder polymer and the amount of the binder polymer disposed on the surface of the porous coating layer in order to ensure adhesion to an electrode. According to the present disclosure, since the amount of the binder polymer in the porous coating layer of the separator manufactured through a humidified phase separation process may be controlled suitably, there is an advantage in that desired effects may be realized even in a separator manufactured through a humidified phase separation process.

Herein, the electrochemical device is a system in which chemical energy is converted into electrical energy through electrochemical reactions, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer secondary batteries, are preferred.

According to the present disclosure, the separator includes a porous substrate, and a porous coating layer formed on at least one surface of the porous substrate.

The porous substrate may refer to a substrate which functions as an ion-conducting barrier which allows ions to pass therethrough, while interrupting an electrical contact between a negative electrode and a positive electrode, and has a plurality of pores formed therein. The pores are interconnected so that gases or liquids may pass from one surface of the substrate to the other surface of the substrate. A porous polymer film including a thermoplastic resin may be used as the porous substrate with a view to imparting a shutdown function. Herein, the term 'shutdown function' refers to a function of melting of the thermoplastic resin to close the pores of the porous substrate when the temperature of a battery is increased, thereby interrupting migration of ions and preventing the thermal runaway of a battery. Non-limiting examples of the thermoplastic resin include polyolefin resins, such as polyethylene, polypropylene, polybutylene, polypentene, or the like. Meanwhile, the thermoplastic resin preferably has a melting point of less than about 200°C with a view to such a shutdown function.

The thickness of the porous substrate is not particularly limited, but the thickness may be particularly 1-100 μm, more particularly 5-50 μm, or about 5-30 μm. Also, the porosity of the porous substrate is not particularly limited, but the porosity may be about 10-95%, or preferably about 35-65%.

The porous coating layer is formed on at least one surface of the porous substrate and includes an inorganic filler and a binder polymer.

According to the present disclosure, in the porous coating layer, the inorganic filler particles are bound to one another by means of the binder polymer, while they are substantially in contact with one another. The interstitial volumes formed among the inorganic filler particles may become vacant spaces to form pores.

According to the present disclosure, the porous coating layer may be formed on one surface or both surfaces of the porous substrate. Although the total thickness of the porous coating layer is not particularly limited, it may be about 1-50 μm, particularly about 1-20 μm, about 1-10 μm, or about 1-5 μm. Particularly, the separator according to the present disclosure is advantageous in that it causes no problem of degradation of adhesion between an electrode and the separator, even though it includes a porous coating layer having a small thickness.

According to the present disclosure, the BET surface area of the inorganic filler, the content of the inorganic filler and the content of the binder polymer are those with which the value calculated from the following Formula 1 satisfies 20-30.

In addition, according to an embodiment of the present disclosure, the value calculated from the following Formula 1 may satisfy 23-28, or 23-27.

[Content of inorganic filler (wt%) x BET surface area of inorganic filler ($m^2/g$)] / [Content of binder polymer (wt%)] [Formula 1]

(wherein the content of binder polymer and the content of inorganic filler are based on 100 wt% of the total weight of the porous coating layer.)

Particularly, the porous coating layer includes the binder polymer in a predetermined range of content determined considering the BET surface area of the inorganic filler and the content of the inorganic filler.

In this manner, it is possible to optimize the amount of the binder polymer covering the surface of the inorganic filler so that the inorganic filler and the binder polymer may be bound sufficiently to each other. In addition, it is possible to optimize the amount of the binder polymer disposed on the surface of the porous coating layer so that a sufficient level of adhesion may be ensured between an electrode and the separator.

Therefore, not only the adhesion between the porous substrate and the porous coating layer but also the adhesion between the separator and an electrode may be improved.

According to the present disclosure, the inorganic filler may be an inorganic filler having a BET surface area capable of satisfying the value as defined by the above Formula 1. For example, the inorganic filler may include an inorganic filler having a BET surface area of 10-20 $m^2/g$, or 12-18 $m^2/g$. When preparing a slurry for a porous coating layer, use of the inorganic filler having the above-defined range of BET surface area can reduce the amount of a dispersing agent, as compared to $Al_2O_3$ inorganic filler having a BET surface area of 6 $m^2/g$ and used generally in a porous coating layer, and can minimize the dispersion step advantageously. When the inorganic filler has an excessively large BET surface area, the surface area covered by the binder polymer is increased, and thus the binder polymer used for ensuring the adhesion (Lami-strength) between an electrode and the separator may be reduced relatively. On the other hand, when the inorganic filler has an excessively small BET surface area, the amount of binder polymer distributed at a portion close to the surface portion of the porous coating layer may be reduced, thereby making it difficult to ensure the adhesion (Peel strength) between the porous substrate and the porous coating layer, and thus making it difficult to ensure the adhesion (Lami-strength) between an electrode and the separator.

However, the inorganic filler is not essentially limited to one satisfying the above-defined range of BET surface area. Any inorganic filler may be used, as long as it satisfies the value defined by the above Formula 1 and has an adequate BET surface area within a range capable of accomplishing the objects of the present disclosure.

There is no particular limitation in the inorganic filler, as long as it is electrochemically stable. In other words, there is no particular limitation in the inorganic filler, as long as it causes no oxidation and/or reduction in the range (e.g. 0-5 V based on $Li/Li^+$) of operating voltage of an applicable electrochemical device. Particular examples of the inorganic filler include: AlOOH, $Al(OH)_3$, $ZrO_2$, $BaTiO_3$, $Pb(Zr,Ti)O_3$ (PZT), $Pb_{1-x}La_xZr_{1-y}Ti_yO_3$ (PLZT), $PB(Mg_3Nb_{2/3})O_3$-$PbTiO_3$ (PMN-PT), hafnia ($HfO_2$), $SrTiO_3$, $SnO_2$, $CeO_2$, MgO, NiO, CaO, ZnO, $ZrO_2$, $Y_2O_3$, $Al_2O_3$, $TiO_2$, SiC or a mixture thereof. In addition, particular examples of the inorganic filler may further include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-based glass ($0 < x < 4$, $0 < y < 13$), lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), lithium nitride ($Li_xN_y$, $0 < x < 4$, $0 < y < 2$), $SiS_2$-based glass ($Li_xSi_yS_z$, $0 < x < 3$, $0 < y < 2$, $0 < z < 4$), $P_2S_5$-based glass ($Li_xP_yS_z$, $0 < x < 3$, $0 < y < 3$, $0 < z < 7$), or two or more of them.

For example, when the porous coating layer includes at least two inorganic fillers, including a first inorganic filler and a second inorganic filler, according to an embodiment of the present disclosure, the separator for an electrochemical device may satisfy the following Formula 2:

[Content of first inorganic filler (wt%) x BET surface area of first inorganic filler ($m^2/g$) + Content of second inorganic filler (wt%) x BET surface area of second inorganic filler ($m^2/g$)] / [Content of binder polymer (wt%)] [Formula 2]

According to the present disclosure, the binder polymer is not particularly limited, as long as it can provide binding force among the inorganic filler particles and binding force between the porous coating layer and an electrode. For example, the binder polymer may be any one selected from the group consisting of polyvinylidene fluoride-co-hexafluoropropylene (PVDF-co-HFP), polyvinylidene fluoride-co-trichloroethylene, polyvinylidene fluoride-co-chlorotrifluoroethylene, polymethyl (meth)acrylate, polyethyl (meth)acrylate, poly n-propyl (meth)acrylate, polyisopropyl (meth)acrylate, poly n-butyl (meth)acrylate, poly t-butyl (meth)acrylate, poly sec-butyl (meth)acrylate, polypentyl (meth)acrylate, poly 2-ethylbutyl (meth)acrylate, poly 2-ethylhexyl (meth)acrylate, poly n-octyl (meth)acrylate, poly 2-ethylhexyl (meth) acrylate, poly n-octyl (meth)acrylate, polyisooctyl (meth)acrylate, polyisononyl (meth)acrylate, polylauryl (meth)acrylate, polytetradecyl (meth)acrylate, poly N-vinylpyrrolidone, polyacrylonitrile, polyvinyl acetate, polyethylene-co-vinyl acetate, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer and polyimide, or a mixture of two or more of them.

Particularly, according to the present disclosure, the binder polymer may include a non-dispersant binder polymer and a dispersant binder polymer.

The dispersant binder polymer is a polymer having at least one dispersion-contributing functional group in the

backbone or side chain thereof, wherein the dispersion-contributing functional group may include -OH, -CN, or the like. Particular examples of the dispersant binder polymer may include cellulose acetate, cellulose acetate butyrate, cellulose acetate propionate, cyanoethyl pullulan, cyanoethylpolyvinyl alchol, cyanoethyl cellulose, cyanoethyl sucrose, pullulan, carboxymethyl cellulose, or the like. The remaining examples of the binder, except the above examples of the dispersant binder polymer may correspond to the examples of the non-dispersant binder polymer.

According to an embodiment of the present disclosure, the dispersant binder polymer and the non-dispersant binder polymer may be used at the same time as the binder polymer. When using the dispersant binder polymer and the non-dispersant binder polymer at the same time as the binder polymer, the weight ratio of the dispersant binder polymer to the non-dispersant binder polymer may be 1:5-1:20, or 1:10-1:15. When the above-defined weight ratio is satisfied, it is possible to ensure the adhesion to an electrode after coating, while providing stable dispersibility in the porous coating layer.

According to the present disclosure, the content of the inorganic filler in the porous coating layer may be 50-80 wt%, 60-80 wt%, or 60-70 wt%, based on 100 wt% of the total weight of the porous coating layer. In addition, the content of the binder polymer in the porous coating layer may be 20-50 wt%, 30-50 wt%, or 35-50 wt%, based on 100 wt% of the total weight of the porous coating layer. When the content of the inorganic filler and the content of the binder polymer satisfy the above-defined ranges, it is possible to improve the heat resistance of the separator, adhesion between the porous substrate and the porous coating layer and the adhesion between the separator and an electrode.

According to the present disclosure, the adhesion (Peel strength) between the porous substrate and the porous coating layer of the separator may be 200 gf/15 mm or more, 210 gf/15 mm or more, or 220 gf/15 mm or more. When the above-defined range of Peel strength is satisfied, it is possible to prevent separation of the porous coating layer from the porous substrate during the assemblage with electrodes, while realizing maximized adhesion between the porous coating layer disposed on the surface of the separator and the electrode.

As used herein, 'Peel strength' refers to force required for separating the porous coating layer from the porous substrate, when the separator is cut into a size of 15 mm X 100 mm, a double-sided adhesive tape is attached to a glass plate in such a manner that the tape may be adhered to the porous coating layer surface, the end portion of the separator is mounted to a UTM instrument, and then force is applied thereto at 180° and a rate of 300 mm/min.

Meanwhile, according to the present disclosure, the separator may further include other additives as ingredients of the porous coating layer, if necessary, besides the binder polymer and the inorganic filler.

The separator according to an embodiment of the present disclosure may be obtained by preparing a composition for forming a porous coating layer, containing an inorganic filler and a binder polymer, and applying the composition onto at least one surface of a porous substrate, followed by drying.

For example, the binder polymer is dissolved in a solvent first to prepare a polymer solution, and the inorganic filler is introduced to the polymer solution and mixed therewith to prepare a slurry for forming a porous coating layer. Next, the slurry is applied onto a porous substrate and is allowed to stand under the condition of a relative humidity of about 40-80% for a predetermined time to solidify (dry) the binder polymer. Herein, a phase separation of the polymer polymer is induced. During the phase separation, the solvent migrates toward the surface of the porous coating layer to increase the content of the binder polymer at the surface portion of the porous coating layer. Pores are formed in the portion below the surface portion of the porous coating layer due to the interstitial volumes among the inorganic filler particles, and the porous coating layer has porous properties. According to an embodiment of the present disclosure, the porous coating layer has a binder polymer content increasing toward the surface portion, but the inorganic filler and the binder polymer are present in combination throughout the porous coating layer in the thickness direction thereof. **In** addition, the pore structure derived from the interstitial volumes among the inorganic filler particles is retained from the bottom of the porous coating layer to the top thereof. **In** this manner, the porous coating layer may retain a low level of resistance.

Meanwhile, according to an embodiment of the present disclosure, the solid content of the porous coating layer, except the solvent, is preferably controlled to a range of about 10-80 wt%. **In** addition, non-limiting examples of the solvent used herein may include any one selected from acetone, tetrahydrofuran, methylene chloride, chloroform, dimethyl formamide, N-methyl-2-pyrolidone, methyl ethyl ketone, cyclohexane, methanol, ethanol, isopropyl alcohol, propanol and water, or a mixture of two or more of them.

Although there is no particular limitation in the process for coating the slurry for forming a porous coating layer onto the porous substrate, it is preferred to use a slot coating or dip coating process. A slot coating process includes coating a composition supplied through a slot die onto the whole surface of a substrate and is capable of controlling the thickness of a coating layer depending on the flux supplied from a metering pump. In addition, a dip coating includes dipping a substrate into a tank containing a composition to carry out coating and is capable of controlling the thickness of a coating layer depending on the concentration of the composition and the rate of removing the substrate from the tank. Further, in order to control the coating thickness more precisely, it is possible to carry out post-metering through a Mayer bar or the like, after dipping.

The thickness of the separator according to the present disclosure is not particularly limited, but it may be about 5-50 $\mu$m, preferably about 5-20 $\mu$m, or about 5-15 $\mu$m.

In another aspect of the present disclosure, there is provided an electrode assembly including two electrodes having a polarity opposite to each other; and a separator interposed between two electrodes, wherein the separator is the separator according to the present disclosure.

In the electrode assembly according to the present disclosure, the adhesion (Lami strength) between the electrode and the separator may be 100 gf/25 mm or more, 110 gf/ 25 mm or more, or 120 gf/15 mm or more. When the above-defined range of Lami strength is satisfied, it is possible to prevent deformation of the porous substrate caused by alleviation of the temperature and pressure conditions during the process of assemblage with the electrodes. It is also possible to reduce the folding phenomenon between the separator and the electrode adhered thereto during the injection of an electrolyte.

As used herein, 'Lami strength' refers to adhesion between any one of the electrodes and the outermost surface (porous coating layer) of the separator facing the electrode. In addition, the Lami strength stated herein means force required for separating the electrode from the outermost surface (porous coating layer) of the separator facing the electrode, when a negative electrode having a size of 25 mm x 70 mm and a separator having a size of 25 mm x 70 mm are prepared, the separator and the electrode are laminated and inserted between PET films having a thickness of 100 μm and adhered by using a flat press at 60°C under a pressure of 6.5 MPa for 1 second, the end portion of the adhered separator and electrode was mounted to a UTM instrument, and force is applied at 180° and a rate of 300 mm/min.

The two electrodes having a polarity opposite to each other and used in combination with the separator according to the present disclosure may be a positive electrode and/or a negative electrode. The electrodes may be obtained by allowing electrode active materials to be bound to an electrode current collector through a method generally known in the art.

Among the electrode active materials, non-limiting examples of a positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof are used preferably.

Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably.

Non-limiting examples of a positive electrode current collector include foil made of aluminum, nickel or a combination thereof. Non-limiting examples of a negative electrode current collector include foil made of copper, gold, nickel, copper alloys or a combination thereof.

In still another aspect of the present disclosure, there is provided an electrochemical device including at least one of the above-described electrode assembly. Particularly, the electrochemical device may include the electrode assembly including an electrolyte injected thereto.

The electrolyte that may be used in the electrochemical device according to the present disclosure is a salt having a structure of $A^+B^-$. For example, $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

In addition, the present disclosure may provide a battery module which includes a battery including the electrode assembly as a unit cell, a battery pack including the battery module, and a device including the battery pack as an electric power source. Particular examples of the device include, but are not limited to: power tools driven by the power of an electric motor; electric cars, including electric vehicles (EVs), hybrid electric vehicles (HEVs), plug-in hybrid electric vehicles (PHEVs), or the like; electric two-wheeled vehicles, including E-bikes and E-scooters; electric golf carts; electric power storage systems; or the like.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present

disclosure will be thorough and complete, and will fully convey the scope of the present disclosure to those skilled in the art.

Examples

The separator according to each of Examples and Comparative Examples was manufactured as follows.

Example 1

**Manufacture of Separator Including Porous Coating Layer**

First, polyvinylidene fluoride-co-hexafluoropropylene (PVDF:HFP = 80:20, Solvay Co., Solef 21510), polyvinylidene fluoride-co-trichloroethylene (PVDF:CTFE = 80:20, Daikin Co., VT-475) and cyanoethyl polyvinyl alcohol, as binder polymers, were introduced to acetone, and AlOOH powder having an average diameter of 250 nm as an inorganic filler was introduced thereto to prepare a slurry for forming a porous coating layer.

The slurry had a solid content (the binder polymers and the inorganic filler), except the solvent, of 18 wt%, and the weight ratio of the total binder polymers to the inorganic filer was 39:61. The slurry was mixed by using a painter shaker for about 2 hours. The slurry was applied to both surface of a polymer film (thickness: about 9 μm, porosity: about 40-45%) made of polyethylene through a dip coating process and dried under a relative humidity of 45% to obtain a separator. The drying was carried out at room temperature. The drying time was about 10 minutes. In the obtained separator, the thickness of the porous coating layers on both surfaces of the polymer film was about 3 μm. FIG. 1 is a scanning electron microscopic (SEM) image of the separator according to Example 1. FIG. 1 shows the enlarged section of the surface of the porous coating layer / section of the separator according to Example 1/ enlarged section of the porous substrate (polymer film made of polyethylene) in the listed order.

**Examples 2 and 3 and Comparative Examples 1-8**

Each of the separators was obtained in the same manner as Example 1, except that the composition was changed as shown in the following Table 1 to obtain the separator according to each of Examples 2 and 3 and Comparative Examples 1-8. Herein, the inorganic filler, $Al_2O_3$, contained in Comparative Example 2 has a BET surface area of 6.4 $m^2/g$, while AlOOH has a BET surface area of 16.1 $m^2/g$, and thus the BET surface area of Comparative Example 2 is calculated according to the formula of (6.4+16.1)/2. In Table 1, the total inorganic filler is not indicated correctly for example 3. The amount is 63 wt.% and not 68 wt.%.

[Table 1]

| | Type | Unit | Ex.1 | Ex.2 | Ex. 3 | Comp. Ex.1 | Comp. Ex. 2 | Comp. Ex. 3 | Comp. Ex. 4 | Comp. Ex.5 | Comp. Ex. 6 | Comp. Ex. 7 | Comp. Ex. 8 |
|---|---|---|---|---|---|---|---|---|---|---|---|---|---|
| Inorganic filler | $Al_2O_3$ | wt% | 0 | 0 | 0 | 0 | 40.5 | 0 | 0 | 0 | 0 | 0 | 0 |
| | AlOOH | wt% | 61 | 62 | 63 | 69 | 40.5 | 62 | 40 | 63 | 65 | 65 | 77 |
| BET surface area of inorganic filler | - | $m^2/g$ | 16.1 | 16.1 | 16.1 | 16.1 | 11.3 | 8.0 | 16.1 | 7.7 | 22.0 | 19.2 | 16.1 |
| Total inorganic filler | - | wt% | 61 | 62 | 68 | 69 | 81 | 62 | 40 | 63 | 65 | 65 | 77 |

| content | | - | vol% | 47 | 48 | 49 | 55 | 65 | 48 | 28 | 49 | 51 | 51 | 62 |
|---|---|---|---|---|---|---|---|---|---|---|---|---|---|---|
| Binder polymer | PVDF copolymer | PVDF-HFP (VDF:HFP 80:20) | wt% | 26.8 | 26 | 25.3 | 20.8 | 12 | 26 | 40 | 25.3 | 23.8 | 23.8 | 12 |
| | | PVDF-CTFE (VDF:CTFE 80:20) | wt% | 9.2 | 9 | 8.7 | 7.2 | 4 | 9 | 17 | 8.7 | 8.2 | 8.2 | 8 |
| | Dispersant binder | Cyanoethyl polyvinyl alcohol | wt% | 3 | 3 | 3 | 3 | 3 | 3 | 3 | 3 | 3 | 3 | 3 |
| Total binder content | | - | wt% | 39 | 38 | 37 | 31 | 19 | 38 | 60 | 37 | 35 | 35 | 23 |
| | | - | vol% | 53 | 52 | 51 | 45 | 35 | 52 | 72 | 51 | 49 | 49 | 38 |
| Coating layer loading | | - | g/m² | 6 | 6 | 6 | 6 | 10.5 | 6 | 6 | 6 | 6 | 6 | 6 |
| Coating layer thickness | | | µm | Double sided 1.5/1.5 | Double sided 1.5/1.5 | Double sided 1.5/1.5 | Double sided 1.5/1.5 | Double sided 1.5/1.5 | Double sided 1.5/1.5 | Double sided 1.5/1.5 | Double sided 1.5/1.5 | Double sided 1.5/1.5 | Double sided 1.5/1.5 | Double sided 1.5/1.5 |
| Content of inorganic filler (wt%) x BET surface area (m²/g) of inorganic filler /content of binder polymer (wt%) | | - | - | 25.2 | 26.3 | 27.4 | 35.8 | 53.3 | 13.2 | 10.7 | 13.1 | 40.9 | 35.7 | 53.9 |

## Evaluation of Physical Properties of Separator

The separator according to each of Examples and Comparative Examples were evaluated in terms of its physical properties. The results are shown in the following Table 2.

[Table 2]

| | Unit | Ex.1 | Ex.2 | Ex. 3 | Comp. Ex.1 | Comp. Ex. 2 | Comp. Ex. 3 | Comp. Ex. 4 | Comp. Ex.5 | Comp. Ex. 6 | Comp. Ex. 7 | Comp. Ex. 8 |
|---|---|---|---|---|---|---|---|---|---|---|---|---|
| Adhesion between porous substrate and porous coating layer | Gf/15 mm | 260 | 230 | 210 | 60 | 50 | 200 | 300 | 40 | 54 | 82 | 55 |

| (Peel strength) | | | | | | | | | | | | |
|---|---|---|---|---|---|---|---|---|---|---|---|---|
| Electrode-separator adhesion (Lami strength) | Gf/25 mm | 150 | 125 | 110 | 10 | 5 | 180 | 200 | 30 | 14 | 43 | 14 |
| 150°C Heat shrinkage (0.5h) | MD/TD (%) | 5/5 | 6/6 | - | 2/2 | 2/1 | 70/70 | 90/90 | - | - | - | - |
| Hot tip loss of length | mm | 2.5 | 2.7 | - | 1.0 | 0.5 | 5.6 | 3.7 | - | - | - | - |

As can be seen from Table 2, each of Examples 1-3 shows a higher adhesion as compared to Comparative Example 1-8. It can be also seen that Examples 1 and 2 show higher heat resistance and stability as compared to Comparative Examples 1-4.

Particularly, Comparative Example 3 includes the binder polymer and the inorganic filler each in the same amount as Examples 1 and 2, except the BET surface area of the inorganic filler. However, since the BET surface area of the inorganic filler contained in Comparative Example 3 is smaller as compared to Example 1 and 2, the surface of the inorganic filler covered with the binder polymer is reduced. Therefore, Comparative Example 3 may show an increased adhesion (Peel strength and Lami strength), but is degraded in terms of packing of the inorganic filler particles as compared to Examples 1 and 2 to cause degradation of heat resistance, thereby providing poor heat resistance and stability.

Particularly, each of the physical properties was evaluated as follows.

(1) Evaluation of Adhesion (Peel Strength, gf/15 mm) between Porous Substrate and Porous Coating Layer of Separator

Each of the separators according to Examples 1-3 and Comparative Examples 1-8 was cut into a size of 15 mm X 100 mm.

A double-sided adhesive tape was attached to a glass plate, and the porous coating layer surface of the separator was attached to the adhesive tape. Then, the end portion of the separator was mounted to a UTM instrument (Instron Co.), and force was applied at 180° and a rate of 300 mm/min. The force required for separating the porous coating layer from the porous substrate was measured.

(2) Evaluation of Electrode-Separator Adhesion (Lami Strength, gf/25 mm)

First, a negative electrode active material (natural graphite and artificial graphite, weight ratio 5:5), conductive material (Super P) and a binder (polyvinylidene fluoride (PVDF) were mixed at a weight ratio of 92:2:6, and the resultant mixture was dispersed in water to prepare a slurry. The slurry was coated on copper foil to obtain a negative electrode, which was cut into a size of 25 mm x 70 mm.

Each of the separators according to Examples 1-3 and Comparative Examples 1-8 was cut into a size of 25 mm x 70 mm.

The separator was stacked with the negative electrode, and the stack was inserted between PET films having a thickness of 100 μm and adhered by using a flat press. Herein, the flat press was heated and pressurized at 60°C under a pressure of 6.5 MPa for 1 second.

The end portion of the adhered separator and negative electrode was mounted to a UTM instrument (Instron Co.), and force was applied at 180° and a rate of 300 mm/min. The force required for separating the negative electrode from the separator adhered thereto was measured.

(3) Evaluation of 150°C Heat Shrinkage

Each of the separators according to Examples 1 and 2 and Comparative Examples 1-4 was cut into a size of 50 mm x 50 mm. The separator was allowed to stand in a convection oven set at 150°C for 30 minutes. After 30 minutes, a decrease in length of the separator as compared to the initial length (50 mm x 50 mm) was calculated in the unit of % to determine the heat shrinkage.

(4) Evaluation of Hot Tip Loss of Length of Separator

Each of the separators according to Examples 1 and 2 and Comparative Examples 1-4 was cut into a size of 50

mm x 50 mm. The separator was evaluated through a hot tip test by using a UTM instrument. The tip used in the hot tip test has a diameter of 1 pi. The separator was tested at a tip temperature of 450°C at a rate of 1 mm/s with a stop for 5 seconds. The loss of length was measured as the diameter of a ruptured separator after the hot tip test.

## Claims

**1.** A separator for an electrochemical device, comprising a porous substrate and a porous coating layer formed on at least one surface of the porous substrate;

wherein the porous coating layer comprises a binder polymer and an inorganic filler, and the porous coating layer satisfies the following Formula 1:

20 ≤ [Content of inorganic filler (wt%) x BET surface area of inorganic filler ($m^2/g$)] / [Content of binder polymer (wt%)] ≤ 30 [Formula 1]

wherein the content of binder polymer and the content of inorganic filler are based on 100 wt% of the total weight of the porous coating layer; and
wherein the adhesion (Peel strength) between the porous substrate and the porous coating layer of the separator is 200 gf/15 mm (130,76 N/m) or more, as measured using the method set out in the description.

**2.** The separator for an electrochemical device according to claim 1, wherein the porous coating layer satisfies the following Formula 1:

23 ≤ [Content of inorganic filler (wt%) x BET surface area of inorganic filler ($m^2/g$)] / [Content of binder polymer (wt%)] ≤ 28 [Formula 1]

wherein the content of binder polymer and the content of inorganic filler are based on 100 wt% of the total weight of the porous coating layer.

**3.** The separator for an electrochemical device according to claim 1, wherein the inorganic filler comprises an inorganic filler having a BET surface area of 10-20 $m^2/g$.

**4.** The separator for an electrochemical device according to claim 1, wherein the content of inorganic filler is 50-80 wt% based on 100 wt% of the total weight of the porous coating layer, and the content of binder polymer is 20-50 wt% based on 100 wt% of the total weight of the porous coating layer.

**5.** The separator for an electrochemical device according to claim 1, wherein the binder polymer is polyvinylidene fluoride-co-hexafluoropropylene, polyvinylidene fluoride-co-trichloroethylene, polymethyl methacrylate, polybutyl acrylate, polybutyl methacrylate, polyacrylonitrile, polyvinyl pyrro1idone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethylpolyvinyl alcohol, cyanoethyl cellulose, cyanoethyl sucrose, pullulan, carboxymethyl cellulose, or a mixture of two or more of these.

**6.** An electrode assembly comprising two electrodes having a polarity opposite to each other and a separator interposed between the two electrodes, wherein the separator comprises the separator as defined in any one of claims 1 to 5.

**7.** The electrode assembly according to claim 6, wherein the adhesion (Lami strength) between the electrode and the separator is 100 gf/25 mm (39.23 N/m) or more, as measured using the method set out in the description.

**8.** An electrochemical device comprising at least one of the electrode assembly as defined in claim 6.

**9.** The electrochemical device according to claim 8, which is a lithium secondary battery.

## Patentansprüche

1. Separator für eine elektrochemische Vorrichtung, umfassend ein poröses Substrat und eine poröse Beschichtungsschicht, die auf mindestens einer Oberfläche des porösen Substrats ausgebildet ist;

   wobei die poröse Beschichtungsschicht ein Bindemittelpolymer und einen anorganischen Füllstoff umfasst, und die poröse Beschichtungsschicht die folgende Formel 1 erfüllt:

   [Formel 1] 20 ≤ [Gehalt an anorganischem Füllstoff (Gew.-%) × BET-Oberfläche des anorganischen Füllstoffs ($m^2/g$)] / [Gehalt an Bindemittelpolymer (Gew.-%)] ≤ 30 [Formula 1]

   wobei der Gehalt an Bindemittelpolymer und der Gehalt an anorganischem Füllstoff auf 100 Gew.-% des Gesamtgewichts der porösen Beschichtungsschicht bezogen sind; und
   wobei die Haftfestigkeit (Schälfestigkeit) zwischen dem porösen Substrat und der porösen Beschichtungsschicht des Separators 200 gf/15 mm (130,76 N/m) oder mehr beträgt, gemessen nach dem in der Beschreibung angegebenen Verfahren.

2. Separator für eine elektrochemische Vorrichtung gemäß Anspruch 1, wobei die poröse Beschichtungsschicht die folgende Formel 1 erfüllt:

   [Formel 1] 23 ≤ [Gehalt an anorganischem Füllstoff (Gew.-%) × BET-Oberfläche des anorganischen Füllstoffs ($m^2/g$)] / [Gehalt an Bindemittelpolymer (Gew.-%)] ≤ 28 [Formula 1]

   wobei der Gehalt an Bindemittelpolymer und der Gehalt an anorganischem Füllstoff auf 100 Gew.-% des Gesamtgewichts der porösen Beschichtungsschicht bezogen sind.

3. Separator für eine elektrochemische Vorrichtung gemäß Anspruch 1, wobei der anorganische Füllstoff einen anorganischen Füllstoff mit einer BET-Oberfläche von 10-20 $m^2/g$ umfasst.

4. Separator für eine elektrochemische Vorrichtung gemäß Anspruch 1, wobei der Gehalt an anorganischem Füllstoff 50-80 Gew.-%, bezogen auf 100 Gew.-% des Gesamtgewichts der porösen Beschichtungsschicht, beträgt, und der Gehalt an Bindemittelpolymer 20-50 Gew.-%, bezogen auf 100 Gew.-% des Gesamtgewichts der porösen Beschichtungsschicht, beträgt.

5. Separator für eine elektrochemische Vorrichtung gemäß Anspruch 1, wobei das Bindemittelpolymer Polyvinylidenfluorid-co-Hexafluorpropylen, Polyvinylidenfluorid-co-Trichlorethylen, Polymethylmethacrylat, Polybutylacrylat, Polybutylmethacrylat, Polyacrylnitril, Polyvinylpyrrolidon, Polyvinylacetat, Polyethylen-co-Vinylacetat, Polyethylenoxid, Polyarylat, Celluloseacetat, Celluloseacetatbutyrat, Celluloseacetatpropionat, Cyanoethylpullulan, Cyanoethylpolyvinylalkohol, Cyanoethylcellulose, Cyanoethylsaccharose, Pullulan, Carboxymethylcellulose oder eine Mischung aus zwei oder mehr dieser Stoffe ist.

6. Elektrodenanordnung, umfassend zwei Elektroden mit entgegengesetzter Polarität und einen zwischen den beiden Elektroden angeordneten Separator, wobei der Separator den in mindestens einem der Ansprüche 1 bis 5 definierten Separator umfasst.

7. Elektrodenanordnung gemäß Anspruch 6, wobei die Haftfestigkeit (Lami-Festigkeit) zwischen der Elektrode und dem Separator 100 gf/25 mm (39,23 N/m) oder mehr beträgt, gemessen nach dem in der Beschreibung angegebenen Verfahren.

8. Elektrochemische Vorrichtung, umfassend mindestens eine der in Anspruch 6 definierten Elektrodenanordnungen.

9. Elektrochemische Vorrichtung gemäß Anspruch 8, bei der es sich um eine Lithium-Sekundärbatterie handelt.

## Revendications

1. Séparateur pour un dispositif électrochimique, comprenant un substrat poreux et une couche de revêtement poreuse

formée sur au moins une surface du substrat poreux ;

dans lequel la couche de revêtement poreuse comprend un polymère liant et une charge inorganique, et la couche de revêtement poreuse satisfait à la formule 1 suivante :

20 ≤ [Teneur en charge inorganique (% en poids) × surface spécifique BET de la charge inorganique ($m^2/g$)]/[Teneur en polymère liant (% en poids)] ≤ 30 où la teneur en polymère liant et la teneur en charge inorganique sont basées sur 100 % en poids du poids total de la couche de revêtement poreuse ; et [Formule 1]

dans lequel l'adhérence (force de pelage) entre le substrat poreux et la couche de revêtement poreuse du séparateur est de 200 gf/15 mm (130,76 N/m) ou plus, telle que mesurée en utilisant la méthode décrite dans la description.

**2.** Séparateur pour un dispositif électrochimique selon la revendication 1, dans lequel la couche de revêtement poreuse satisfait à la formule 1 suivante :

23 ≤ [Teneur en charge inorganique (% en poids) × surface spécifique BET de la charge inorganique ($m^2/g$)]/[Teneur en polymère liant (% en poids)] ≤ 28 où la teneur en polymère liant et la teneur en charge inorganique sont basées sur 100 % en poids du poids total de la couche de revêtement poreuse. [Formule 1]

**3.** Séparateur pour un dispositif électrochimique selon la revendication 1, dans lequel la charge inorganique comprend une charge inorganique présentant une surface spécifique BET de 10-20 $m^2/g$.

**4.** Séparateur pour un dispositif électrochimique selon la revendication 1, dans lequel la teneur en charge inorganique est de 50-80 % en poids sur la base de 100 % en poids du poids total de la couche de revêtement poreuse, et la teneur en polymère liant est de 20-50 % en poids sur la base de 100 % en poids du poids total de la couche de revêtement poreuse.

**5.** Séparateur pour un dispositif électrochimique selon la revendication 1, dans lequel le polymère liant est du fluorure de polyvinylidène-co-hexafluoropropylène, du fluorure de polyvinylidène-co-trichloroéthylène, du polyméthacrylate de méthyle, du polyacrylate de butyle, du polyméthacrylate de butyle, du polyacrylonitrile, de la polyvinylpyrrolidone, de l'acétate de polyvinyle, du polyéthylène-co-acétate de vinyle, de l'oxyde de polyéthylène, du polyarylate, de l'acétate de cellulose, de l'acétate-butyrate de cellulose, de l'acétate-propionate de cellulose, du cyanoéthyle pullulane, de l'alcool polyvinylique cyanoéthyle, de la cellulose cyanoéthylée, du saccharose cyanoéthylé, du pullulane, de la carboxyméthylcellulose, ou un mélange de deux ou plus de ceux-ci.

**6.** Ensemble d'électrodes comprenant deux électrodes présentant des polarités opposées l'une à l'autre et un séparateur interposé entre les deux électrodes, dans lequel le séparateur comprend le séparateur tel que défini dans l'une quelconque des revendications 1 à 5.

**7.** Ensemble d'électrodes selon la revendication 6, dans lequel l'adhérence (résistance Lami) entre l'électrode et le séparateur est de 100 gf/25 mm (39,23 N/m) ou plus, telle que mesurée en utilisant la méthode décrite dans la description.

**8.** Dispositif électrochimique comprenant au moins un ensemble d'électrodes tel que défini dans la revendication 6.

**9.** Dispositif électrochimique selon la revendication 8, qui est un accumulateur au lithium.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210114280
- EP 4142036 A
- EP 3866244 A
- US 2014287295 A